# FASCICULE DE BREVET EUROPEEN

(11) **EP 2 682 695 B1**
(45) Date de publication et mention de la délivrance du brevet: **30.09.2020**
(21) Numéro de dépôt: 13354022.9
(22) Date de dépôt: 02.07.2013
(51) Int. Cl.: F25D 19/00, G21B 1/19, F25J 1/00, F25J 1/02, H05G 2/00

(54) **Dispositif et procédé d'extrusion d'un corps solide**
Vorrichtung und Verfahren zur Extrusion eines Festkörpers
Device and method for extruding a solid body

(30) Priorité: 04.07.2012 FR 1201883
(43) Date de publication de la demande: 08.01.2014
(73) Titulaire: COMMISSARIAT À L'ÉNERGIE ATOMIQUE ET AUX ÉNERGIES ALTERNATIVES, 75015 Paris (FR)
(72) Inventeur: Chatain, Denis, 38330 Saint Ismier (FR); Perin, Jean-Paul, 38180 Seyssins (FR); Chichoux, Marc, 38500 Voiron (FR)
(74) Mandataire: Talbot, Alexandre

(56) Documents cités:
- US-A1- 2004 071 266
- ALIAGA-ROSSEL R ET AL: "A cryogenic fiber maker for continuous extrusion", REVIEW OF SCIENTIFIC INSTRUMENTS, AIP, MELVILLE, NY, US, vol. 69, no. 6, 1 juin 1998 (1998-06-01), pages 2365-2368, XP012036623, ISSN: 0034-6748, DOI: 10.1063/1.1148945
- COMBS S K ET AL: "Extruder system for high-throughput/steady-state hydrogen ice supply and application for pellet fueling of reactor-scale fusion experiments", REVIEW OF SCIENTIFIC INSTRUMENTS, AIP, MELVILLE, NY, US, vol. 69, no. 11, 1 novembre 1998 (1998-11-01), pages 4012-4013, XP012036146, ISSN: 0034-6748, DOI: 10.1063/1.1149216
- J. D. SETHIAN ET AL: "Solid deuterium fiber extruder", REVIEW OF SCIENTIFIC INSTRUMENTS, vol. 58, no. 4, 1 janvier 1987 (1987-01-01), page 536, XP055065527, ISSN: 0034-6748, DOI: 10.1063/1.1139265
- VINYAR I V ET AL: "A screw extruder for the centrifugal injector of hydrogen and deuterium pellets for the JT-60U tokamak", INSTRUMENTS AND EXPERIMENTAL TECHNIQUES, KLUWER ACADEMIC PUBLISHERS-PLENUM PUBLISHERS, NE, vol. 49, no. 5, 1 octobre 2006 (2006-10-01), pages 726-731, XP019435046, ISSN: 1608-3180, DOI: 10.1134/S0020441206050216

## Description

### Domaine technique de l'invention

L'invention concerne un dispositif d'extrusion d'un film solide.

### État de la technique

L'irradiation de certaines cibles solides par un laser pulsé de haute intensité est actuellement utilisée dans plusieurs domaines, notamment dans la recherche expérimentale en physique ou encore dans le domaine médical. En effet, il y a un intérêt considérable dans l'étude des plasmas produits par une irradiation laser de cibles solides, et susceptibles d'être utilisés dans des expériences de réactions directes en physique nucléaire. Par ailleurs, dans le domaine de la protonthérapie, un faisceau de protons peut être obtenu en focalisant un laser pulsé de haute intensité sur une cible, généralement en hydrogène ou en deutérium solide, à une cadence de l'ordre de 10 Hz.

Ainsi, il est avantageux de disposer de systèmes permettant la production de cibles solides pures (LiH, H₂, D₂, ...) pouvant être utilisées à des températures cryogéniques. Pour la création de plasmas, par exemple dans les domaines cités ci-dessus, l'hydrogène pur ou l'un de ses isotopes comme le deutérium est souvent utilisé. En effet, les atomes d'hydrogène nécessitent moins de quantité d'énergie pour s'ioniser totalement, et perdent moins d'énergie à cause du rayonnement continu de freinage ou *« bremsstrahlung* » que tout autre élément.

Des dispositifs produisant de l'hydrogène ou du deutérium solides utilisent essentiellement la technique d'extrusion. Ces dispositifs sont principalement intégrés dans les « tokamaks » pour alimenter les plasmas en combustible.

L'article [« screw extruder for the centrifugal injector of hydrogen and deuterium pellets for the JT-60U tokamak » - I. V. Vinyar et al. - Instruments and experimental techniques, 2006, vol. 49, N° 5, pp. 726 - 731] décrit un dispositif d'extrusion muni d'une enceinte d'extrusion, et d'un échangeur thermique utilisant un flux d'hélium liquide refroidissant. L'échangeur thermique permet la condensation de l'isotope d'hydrogène introduit dans l'enceinte d'extrusion. Lors de l'extrusion, la température au sein de l'enceinte est comprise entre 11 et 14 K. L'enceinte d'extrusion comporte une vis qui sert à comprimer le matériau à extruder à des pressions de l'ordre de 5 à 10 MPa. La régulation de la vitesse de rotation de la vis permet ainsi l'extrusion de l'isotope d'hydrogène condensé dans le dispositif. Ce type de dispositif utilise le même principe que les dispositifs d'extrusion dans le domaine de la plasturgie. Cependant en plasturgie, la température du matériau à extruder est augmentée, alors que pour la création de plasmas, on travaille principalement à des températures cryogéniques et la température du matériau à extruder est généralement abaissée de manière à le condenser. Par températures cryogéniques, on entend des températures inférieures à environ 120 K.

Un autre dispositif d'extrusion de deutérium (D₂) est décrit dans l'article [« Solid deuterium fiber extruder » - J. D. Sethian et K. A. Gerber - Review of Scientific Instruments, avril 1987, 58(4), pp. 536 - 538]. Ce dispositif comporte un cylindre en cuivre exempt d'oxygène (OFC) relié à un cryostat à flux continu et des moyens de contrôle de la température du cylindre. Le cryostat utilise de l'hélium liquide et permet le refroidissement du cylindre comportant le deutérium jusqu'à 4,2 K. Un piston disposé à l'intérieur du cylindre comprime le deutérium dans le cylindre engendrant ainsi son extrusion.

En outre, l'article [« A cryogenic fiber maker for continuous extrusion, - Aliaga-Rossel R. et al. - review of scientific instruments - AIP, MELVILLE, NY, US - vol. 69, n° 6 - (1998-06-01) - pages 2365-2368] décrit un dispositif d'extrusion comportant deux réservoirs disposés l'un au-dessus de l'autre. Le réservoir supérieur comporte une portion cylindrique reliée au réservoir inférieur par une portion conique. L'extrusion d'un film solide est réalisée en abaissant, dans un premier temps, la température du réservoir inférieur à une température permettant la solidification du gaz introduit dans le dispositif et en maintenant le réservoir supérieur à une température proche de la température de fusion pour obtenir un état liquide. Le gaz est ensuite introduit dans le réservoir supérieur jusqu'au remplissage du réservoir supérieur par le liquide. Enfin, en utilisant la canalisation externe d'alimentation en gaz, une pression extérieure d'extrusion est générée au sein des réservoirs pour extruder le film solide.

L'extrusion de cibles solides, notamment en hydrogène ou en deutérium, nécessite la mise en œuvre de pressions élevées à des températures cryogéniques. De ce fait, les dispositifs d'extrusion comportent généralement des moyens de refroidissement et des moyens supplémentaires pour générer une pression au sein de l'enceinte d'extrusion. Ces dispositifs sont complexes et difficiles à fabriquer et à intégrer à d'autres dispositifs comme les « tokamaks » ou les dispositifs de protonthérapie. De plus, un procédé d'extrusion utilisant ce type de dispositifs, nécessite un parfait contrôle de plusieurs paramètres relatifs à la température et à la pression au sein de l'enceinte d'extrusion, compliquant ainsi l'obtention de cibles solides pures.

### Objet de l'invention

Dans certaines applications, il existe un besoin de fournir un dispositif d'extrusion de cibles solides pures, facile à réaliser, à utiliser, et à intégrer à d'autres dispositifs, et en particulier sans utiliser de pièces mobiles.

On tend à satisfaire ce besoin en prévoyant un dispositif d'extrusion d'un film solide comportant une cellule munie d'un fond et de parois latérales, un orifice d'entrée, dans la cellule, d'un matériau destiné à former le film solide, un orifice de sortie du film solide de la cellule, et un dispositif d'application d'une première température à l'orifice de sortie de la cellule et d'une deuxième température dans une première zone de la cellule distincte de l'orifice de sortie. Avantageusement, l'orifice de sortie est situé en dessous de l'orifice d'entrée, dans le fond de la cellule. En outre, le dispositif d'extrusion comporte un circuit de commande imposant au dispositif d'application des première et seconde températures un premier réglage pour former un volume du matériau en phase solide à l'intérieur de la cellule, ledit volume obstruant l'orifice de sortie, et un deuxième réglage pour générer un gradient de température, entre l'orifice de sortie et la première zone de sorte à générer une pression dans la cellule forçant l'extrusion du film solide par l'orifice de sortie.

On prévoit également un procédé d'extrusion d'un film solide comportant une étape d'obturation de l'orifice de sortie en solidifiant le matériau dans l'orifice de sortie, et une étape de formation d'un volume dudit matériau en phase solide, ledit volume recouvrant l'orifice de sortie. Ensuite, l'orifice d'entrée est fermé, puis un gradient de température dans ledit volume est généré de sorte à créer une pression dans la cellule pour forcer l'extrusion du film solide par l'orifice de sortie.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente schématiquement un dispositif d'extrusion ;
- les figures 2 à 4 représentent des étapes d'un procédé d'extrusion d'un film solide, en utilisant un dispositif selon la figure 1.

### Description de modes particuliers de réalisation

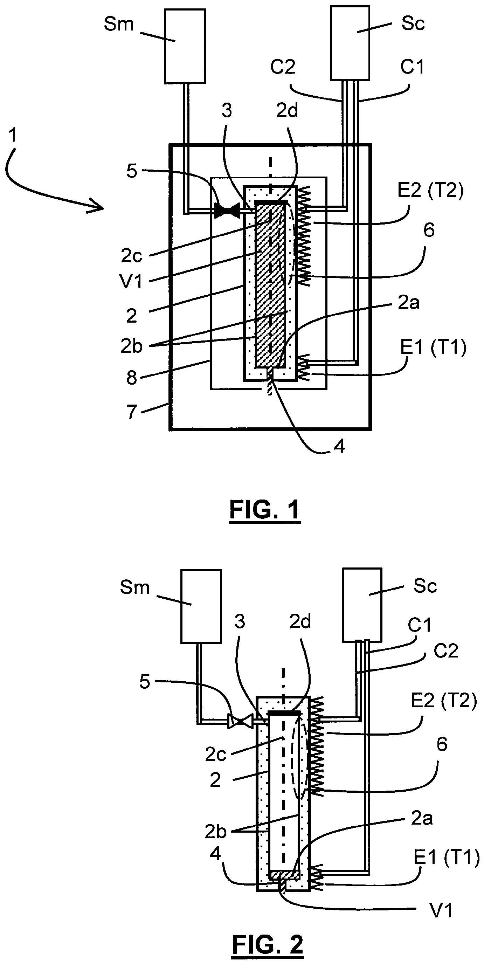

Comme représenté à la figure 1, un dispositif d'extrusion 1 d'un film solide comporte une cellule 2 munie d'un fond 2a et de parois latérales 2b. Le dispositif d'extrusion 1 comporte également un orifice d'entrée 3, dans la cellule 2, d'un matériau destiné à former le film solide, et un orifice de sortie 4 du film solide hors de la cellule 2, disposé avantageusement dans le fond 2a. Il est entendu que les orifices d'entrée 3 et de sortie 4 peuvent être situés en d'autres positions que celles décrites dans cet exemple. Cependant, il est préférable de placer l'orifice d'entrée 3 au-dessus de l'orifice de sortie 4, afin d'éviter des problèmes de convection naturelle. L'orifice d'entrée 3 est relié à une source de distribution Sm du matériau. Le fond 2a est disposé au niveau d'une première extrémité de la cellule 2 qui s'étend le long d'un axe longitudinal 2c. La cellule 2 comporte également un plafond 2d disposé dans une deuxième extrémité de la cellule 2, opposée à la première extrémité selon l'axe longitudinal 2c. La cellule 2 délimite un volume interne Vc. Par volume interne Vc, on entend un volume défini par le fond 2a, les parois latérales 2b et le plafond 2d. Préférentiellement, l'orifice d'entrée 3 est disposé dans l'une des parois latérales 2b, au niveau de la deuxième extrémité de la cellule 2.

De préférence, le plafond 2d est constitué par un disque de rupture. Par disque de rupture, on entend un dispositif de sécurité qui sert à protéger la cellule 2 contre les risques de variations anormales de la pression, au sein de la cellule 2. À titre d'exemple, le disque de rupture 2 peut comporter une membrane étanche qui se rompt lorsqu'une pression de rupture, préalablement fixée, est atteinte.

Pour réguler la température au sein de la cellule 2, le dispositif d'extrusion 1 comporte un dispositif d'application d'une première température T1 à l'orifice de sortie 4 de la cellule 2 et d'une deuxième température T2 dans une première zone 6 de la cellule 2 distincte de l'orifice de sortie 4. Préférentiellement, la première zone 6 de la cellule 2 est disposée au niveau du plafond 2d de la cellule 2 et est distincte de l'orifice d'entrée 3. Le dispositif d'application des première et deuxième températures T1 et T2, peut comporter des premier E1 et second E2 échangeurs de chaleur commandés par des thermostats. Comme illustré à la figure 1, les premier et second échangeurs de chaleurs E1 et E2 peuvent être alimentés par une source Sc d'un fluide à température cryogénique via des premier C1 et second C2 circuits d'alimentation indépendants.

Le dispositif d'application des première et deuxième températures T1 et T2, est régi par un circuit de commande compris dans le dispositif d'extrusion 1. Le circuit de commande est configuré pour former un volume V1 du matériau en phase solide à l'intérieur de la cellule 2 dans un premier temps. Le premier réglage est choisi de manière à ce que ledit volume V1 obture l'orifice de sortie 4. Ledit volume V1 obturant l'orifice de sortie 4 est en contact avec le fond 2a et éventuellement les parois latérales 2b. Le volume V1 peut représenter tout le volume interne Vc de la cellule ou seulement une portion dudit volume interne Vc.

Préférentiellement, le premier réglage est imposé au dispositif d'application des première et deuxième températures T1 et T2 au début de l'introduction du matériau destiné à former le film solide via l'orifice d'entrée 3. Le matériau peut être un matériau en phase gazeuse et/ou en phase liquide. La première température T1 est choisie pour obtenir la solidification du matériau. La deuxième température est choisie pour laisser le matériau à l'état fluide (gazeux ou liquide) à l'orifice d'entrée 3 pour obtenir le remplissage de la cellule 2. Selon le matériau destiné à former le film solide et la valeur de la première température T1, la différence entre la première température T1 et la deuxième température T2, lors du premier réglage, peut varier entre 0,1 K et 10 K. Avantageusement, l'écart entre les première T1 et seconde T2 températures ne dépasse pas une dizaine de kelvin. En effet, plus cet écart sera grand, plus le flux de chaleur se propageant de la zone chaude à la zone froide sera important, et plus il sera difficile de maintenir la première température T1 à la valeur fixée. Le premier réglage imposé par le circuit de commande permet dans un premier temps d'obturer l'orifice de sortie 4 par solidification du matériau destiné à former le film solide. Le premier réglage permet également de solidifier une quantité plus ou moins grande du matériau, après l'obturation de l'orifice de sortie 4, pour former le volume V1 du matériau en phase solide.

Le circuit de commande est également configuré pour générer un gradient de température, dans le volume V1. Le gradient de température est, en fait, appliqué entre l'orifice de sortie 4 et la première zone 6 de sorte à générer une pression dans le volume V1 forçant l'extrusion du film solide par l'orifice de sortie 4. Le gradient de température est accompagné par une expansion volumique du matériau ce qui génère une augmentation de la pression dans la cellule 2. Cette configuration permet simplement de forcer l'extrusion du premier matériau sans utiliser de pièces mobiles dans la cellule 2 en exploitant la pression exercée sur le plafond et les parois latérales pour avoir l'extrusion par l'orifice de sortie 4.

Avantageusement, le circuit de commande est configuré pour complètement remplir le volume interne Vc de la cellule 2 par le matériau en phase solide. Autrement dit, le volume V1 et le volume interne Vc de la cellule 2 sont identiques. Selon ce mode de réalisation, la première zone 6 de la cellule 2 est disposée au niveau du plafond 2d de la cellule 2 et est distincte de l'orifice d'entrée 3.

Comme illustré à la figure 1, le dispositif d'extrusion 1 comporte, avantageusement, une enceinte étanche 7 à l'intérieur de laquelle se trouve la cellule 2 de manière à ce que le film solide extrudé par la cellule 2 soit récupéré dans l'enceinte étanche 7. Le dispositif d'extrusion 1 comporte également des moyens de création d'un vide dans l'enceinte étanche 7. Le vide créé dans l'enceinte 7 peut être un vide secondaire ou encore un vide d'isolement, par exemple inférieur à 0,1 Pa. Préférentiellement, un écran thermique 8 est interposé entre l'enceinte étanche 7 et la cellule 2. L'écran thermique 8 enveloppe la cellule 2 en laissant découvert uniquement l'orifice de sortie 4. Un écran thermique permet de limiter les apports de chaleur par rayonnement provenant des pièces mécaniques et donc d'isoler thermiquement la cellule 2.

La cellule 2 est en communication avec le vide créé dans l'enceinte étanche 7 via l'orifice de sortie 4 avant son obturation avec le volume V1. Ainsi, les moyens de création d'un vide d'isolement au sein de l'enceinte étanche 7 peuvent mettre la cellule 2 sous vide, avant l'introduction du premier matériau destiné à former le film solide dans la cellule 2. Cependant, la section de l'orifice de sortie 4 peut être considérée trop faible pour envisager son utilisation pour le pompage. Il est donc avantageux d'ajouter un dispositif de pompage annexe, connecté à l'orifice de sortie 4, dédié à la cellule 2. Cette mise sous vide de la cellule 2, permet en particulier d'éviter la contamination du matériau introduit dans la cellule 2, assurant ainsi une amélioration de la pureté du film solide extrudé.

La cellule 2 peut comporter une fermeture 5 destinée à boucher l'orifice d'entrée 3 pour isoler la cellule 2 avant l'extrusion. La cellule 2, notamment la fermeture 5, peut comporter des moyens de refroidissement disposés au niveau de l'orifice d'entrée 3. Avantageusement, la fermeture 5 est un bouchon réalisé par le matériau lui-même solidifié dans l'orifice d'entrée 3 lors du premier réglage pour former le volume V1. Par ailleurs, la fermeture 5 peut être n'importe quel moyen connu permettant l'isolation de la cellule 2. Par exemple, la fermeture 5 peut comporter une vanne mécanique, ou tout autre type de vanne. De manière avantageuse, la fermeture 5 comporte une vanne configurée pour réguler la pression dans la cellule 2. Après l'obturation de l'orifice de sortie 4 par une solidification du matériau, la vanne permet avantageusement, d'imposer une pression prédéterminée dans la cellule 2. La vanne peut ainsi réguler la pression dans la cellule 2 pour relâcher les contraintes sur les réglages de la température au sein de la cellule 2 lors de la solidification du matériau dans la cellule 2.

Avantageusement, le dispositif d'extrusion 1 comporte une source d'injection Sm d'hydrogène (H₂) ou de deutérium (D₂) en phase gazeuse ou liquide de manière à extruder, respectivement un film solide d'hydrogène ou de deutérium. Ainsi, le dispositif d'extrusion 1 peut être facilement utilisable dans un dispositif de protonthérapie ou encore dans un dispositif de création de plasma pour les applications en physique expérimentale.

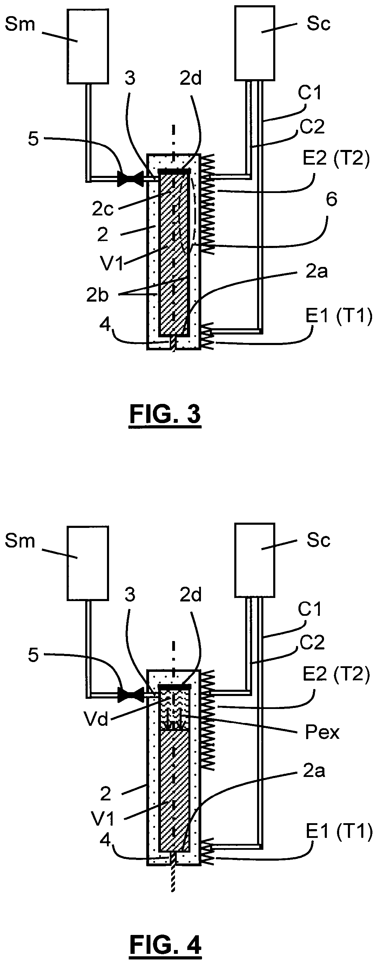

Les figures 2 à 4 illustrent un mode particulier de mise en œuvre d'un procédé d'extrusion d'un film solide en utilisant le dispositif selon la figure 1. Le procédé d'extrusion comporte une étape d'obturation de l'orifice de sortie 4. Préférentiellement, la cellule 2 est initialement mise sous vide. Comme illustré à la figure 2, l'orifice de sortie 4 est obturé en solidifiant le matériau M1 dans l'orifice de sortie 4. Après l'obturation de l'orifice de sortie 4, le volume V1 à base du matériau M1 est formé dans la cellule 2. Comme illustré à la figure 3, le volume V1 est en contact avec les parois latérales 2b et recouvre l'orifice de sortie 4. Avantageusement, le volume V1 occupe tout le volume interne Vc de la cellule 2. Après la formation d'un volume à base du matériau M1 en phase solide, l'orifice d'entrée 3 est fermé et le dispositif d'extrusion 1 génère un gradient de température dans le volume V1. Comme illustré à la figure 4, le gradient de température est généré de manière à engendrer une pression Pex dans la cellule 2 pour forcer l'extrusion du film solide par l'orifice de sortie 4. En effet, le circuit de commande du dispositif d'extrusion 1 impose un réglage au dispositif d'application des première et deuxième températures T1 et T2 de manière à créer un gradient de température entre la première zone 6 et l'orifice de sortie 4. Le gradient de température permet la dilatation d'une partie Vd du volume V1 de sorte à générer la pression Pex dans la cellule 2. Le gradient de température est choisi pour que la pression engendrée Pex force l'extrusion du film solide par l'orifice de sortie 4. Préférentiellement, au fur et à mesure de l'extrusion du film solide, la deuxième température T2 est modifiée de manière à garder une pression Pex sensiblement constante au niveau de l'orifice de sortie 4, assurant ainsi une continuité de l'extrusion du film solide.

Le premier matériau M1 est avantageusement, un fluide cryogénique. Par fluide cryogénique, on entend ici les matériaux du tableau 1 ci-dessous. Le tableau 1 représente des matériaux pouvant être extrudés par le dispositif ainsi que les valeurs des températures du point triple de ces matériaux.

**Tableau 1**

| Gaz | H₂ | D₂ | Ne | O₂ | N₂ | Ar | CH₄ |
|---|---|---|---|---|---|---|---|
| Température du point triple (K) | 13,95 | 18,73 | 24,5 | 54,4 | 63,14 | 84 | 89 |

Selon ce mode de mise en œuvre, l'obturation de l'orifice de sortie 4 est réalisée en maintenant, dans un premier temps, l'orifice de sortie 4 à une première température T1i inférieure à la température T0 du point triple du fluide cryogénique. Par ailleurs, la première zone 6 distincte de l'orifice de sortie 4 est maintenue à une deuxième température T2i supérieure à la température T0 du point triple du fluide cryogénique, ce qui permet de laisser le fluide cryogénique M1 à l'état fluide (gazeux ou liquide) au niveau de l'orifice d'entrée 3. Autrement dit, on évite la solidification du fluide cryogénique M1 au niveau de l'orifice d'entrée 3 pour permettre la circulation du fluide cryogénique vers l'orifice de sortie 4. L'introduction du fluide cryogénique M1 dans la cellule 2 est avantageusement réalisée avec une pression P0 dans la cellule 2, pour permettre la solidification du fluide cryogénique M1 à l'orifice de sortie 4. À titre d'exemple, la vanne de la fermeture 5 qui régule le débit du fluide cryogénique M1 dans la cellule 2 peut être réglée de sorte à obtenir une pression P0 dans la cellule 2. La valeur de la pression P0 peut également être choisie, de manière à réduire le temps nécessaire pour la solidification, à la température T1i, du fluide cryogénique M1 dans l'orifice de sortie 4. Avantageusement, la pression P0 est choisie de manière à obtenir une solidification immédiate du fluide cryogénique M1 dans l'orifice de sortie 4. De préférence, la différence entre la température T0 du point triple du fluide cryogénique M1 et la première température T1i est comprise entre 2 et 5 K, et/ou la différence entre la deuxième température T2i et la température T0 du point triple du fluide cryogénique M1 est comprise entre 2 et 5 K. La différence de température entre l'orifice de sortie 4 et la première zone 6 permet avantageusement de solidifier le fluide cryogénique M1 au niveau du fond 2a de la cellule, et de remplir progressivement la cellule 2 par le fluide cryogénique M1 non solidifié.

Avantageusement, après l'obturation de l'orifice de sortie 4, la deuxième température T2 dans la première zone 6 est abaissée et maintenue à une température T2i' sensiblement égale à la première température T1i à l'orifice de sortie 4. Autrement dit, la deuxième température T2 est préférentiellement, maintenue à une température de 2 à 5 K en dessous de la température T0 du point triple du fluide cryogénique M1. La diminution de la température de la première zone 6 permet avantageusement la formation du volume V1 par solidification du fluide cryogénique M1. Le volume V1 est en contact avec la première zone 6, autrement dit, il recouvre le fond 2a et il est en contact avec les parois latérales 2b.

Préférentiellement, la diminution de la deuxième température T2 est réalisée après le remplissage complet de la cellule 2 par le fluide cryogénique M1. Ainsi, le volume V1 du fluide cryogénique M1 solidifié occupe tout le volume interne Vc de la cellule 2. Ensuite, l'orifice d'entrée 3 est fermé et un gradient de température est appliqué entre l'orifice de sortie 4 et la première zone 6 pour générer une pression forçant l'extrusion du film solide. Lorsque le volume V1 occupe tout le volume interne Vc de la cellule 2, la fermeture de l'orifice d'entrée 3 est réalisée par la formation dudit volume V1. Par ailleurs, comme cité ci-dessus, la fermeture de l'orifice d'entrée 3 peut également être réalisée par un bouchon formé par le matériau M1 solidifié dans l'orifice d'entrée 3 lors de la formation du volume V1. Avantageusement, cette obturation de l'orifice d'entrée 3 est réalisée en fermant la vanne de la fermeture 5.

Dans le domaine d'extrusion de films solides, la pression minimale appliquée à un matériau solide dans une enceinte d'extrusion pour l'extruder, est proportionnelle à la résistance de cisaillement dudit matériau au voisinage de l'orifice d'extrusion. Par ailleurs, il est connu que la résistance de cisaillement d'un matériau en phase solide, notamment un fluide cryogénique solidifié, diminue lorsque sa température est proche de celle du point triple. Ainsi, il est avantageux de réduire la résistance de cisaillement du matériau M1 au voisinage de l'orifice de sortie 4 avant la génération de la pression forçant l'extrusion. Autrement dit, la première température T1 à l'orifice de sortie 4 est maintenue à une température sensiblement égale à la température T0 du point triple du matériau M1, lors de l'extrusion du film solide.

Le procédé d'extrusion décrit ci-dessus permet avantageusement, de générer une pression au sein de la cellule 2 forçant l'extrusion d'un film solide sans l'utilisation d'une pièce mécanique mobile dans la cellule 2 durant l'extrusion. L'application d'un gradient de température entre l'orifice de sortie 4 et la première zone 6, permet la dilatation d'une portion Vd du volume V1 qui agit ainsi, comme un piston virtuel comprimant le matériau M1 en phase solide en direction de l'orifice de sortie 4. L'intensité de dilatation de la portion Vd du volume V1, et de ce fait, la vitesse d'extrusion du film solide dépend de l'amplitude du gradient de température appliqué entre la première zone 6 et l'orifice de sortie 4. Ainsi, il est possible d'asservir la deuxième température T2 à la vitesse d'extrusion du film solide. Autrement dit, l'extrusion du film solide est réalisée avec une vitesse régulée par le réglage de la deuxième température T2 à la première zone 6 distincte de l'orifice de sortie 4. En effet, lors de l'étape de l'extrusion, la modification de la deuxième température T2 au niveau de la première zone 6, permet de modifier la pression exercée dans le volume V1 et ainsi de modifier la vitesse d'extrusion du filme solide à travers l'orifice de sortie 4. Préférentiellement, la deuxième température T2 est régulée avec une précision de l'ordre du centième de kelvin, de sorte à contrôler la vitesse d'extrusion du film solide de manière efficace et précise.

À titre d'exemple, une cellule ayant un volume interne de 10 cm³ a été réalisée selon l'invention. La cellule a été munie d'un orifice d'entrée d'environ 1 mm de diamètre et d'un orifice de sortie d'une section d'environ 0,1 mm². En utilisant l'hydrogène comme matériau à extruder, la première température T1 a été fixée à environ 13 K et la seconde température a été fixée à environ 20 K. Cette configuration de la cellule et ces conditions ont permis d'extruder un film en hydrogène solide d'environ 100 m de long. Le film en hydrogène solide extrudé avait une épaisseur d'environ 100 µm et une largeur d'environ 1 mm.

## Revendications

1. Dispositif d'extrusion (1) d'un film solide comportant :
- une cellule (2) munie d'un fond (2a) et de parois latérales (2b) ;
- un orifice d'entrée (3), dans la cellule (2), d'un matériau destiné à former le film solide ;
- un orifice de sortie (4) du film solide de la cellule (2) ;
- un dispositif d'application d'une première température (T1) à l'orifice de sortie (4) de la cellule (2) et d'une deuxième température (T2) dans une première zone (6) de la cellule (2) distincte de l'orifice de sortie (4) ;
- un circuit de commande apte à imposer au dispositif d'application des première (T1) et seconde (T2) températures un premier réglage pour former un volume (V1) du matériau en phase solide à l'intérieur de la cellule (2), ledit volume obstruant l'orifice de sortie (4) ; **caractérisé en ce que** le circuit de commande est apte à imposer au dispositif d'application des première et seconde températures un deuxième réglage pour générer un gradient de température, entre l'orifice de sortie (4) et la première zone (6) de sorte à générer une pression dans la cellule (2) forçant l'extrusion du film solide par l'orifice de sortie (4).

2. Dispositif d'extrusion (1) selon la revendication 1, **caractérisé en ce que** l'orifice de sortie (4) est situé en dessous de l'orifice d'entrée (3).

3. Dispositif d'extrusion (1) selon l'une des revendications 1 et 2, **caractérisé en ce que** le circuit de commande est apte à imposer au dispositif d'application des première (T1) et seconde (T2) températures un troisième réglage pour complètement remplir le volume interne (Vc) de la cellule (2) par ledit matériau en phase solide.

4. Dispositif d'extrusion (1) selon l'une quelconque des revendications 1 à 3, **caractérisé en ce qu'**il comporte une enceinte étanche (7) à l'intérieur de laquelle se trouve la cellule (2) et **en ce qu'**il comporte des moyens de création d'un vide dans l'enceinte étanche (7), le film solide extrudé par la cellule (2) étant récupéré dans l'enceinte étanche (7).

5. Dispositif d'extrusion (1) selon l'une quelconque des revendications 1 à 4, **caractérisé en ce qu'**il comporte une source d'injection (Sm) d'hydrogène ou de deutérium en phase gazeuse ou liquide de manière à extruder, respectivement un film solide d'hydrogène ou de deutérium.

6. Dispositif d'extrusion (1) selon l'une quelconque des revendications 1 à 5, **caractérisé en ce que** la cellule (2) comporte une fermeture (5) de l'orifice d'entrée (3).

7. Dispositif d'extrusion (1) selon la revendication 6, **caractérisé en ce que** la fermeture (5) comporte une vanne configurée pour réguler la pression dans la cellule (2).

8. Dispositif d'extrusion (1) selon l'une des revendications 6 et 7, **caractérisé en ce que** la fermeture (5) comporte des moyens de refroidissement.

9. Procédé d'extrusion d'un film solide utilisant un dispositif selon l'une quelconque des revendications 1 à 8, et comportant les étapes successives suivantes :
- obturer l'orifice de sortie (4) en solidifiant le matériau (M1) dans l'orifice de sortie (4) ;
- former un volume (V1) du matériau (M1) en phase solide, ledit volume (V1) recouvrant l'orifice de sortie (4) ;
**caractérisé en ce qu'**il comporte les étapes successives suivantes :
- fermer l'orifice d'entrée (3) ;
- générer un gradient de température dans ledit volume (V1) de manière à générer une pression (Pₑₓ) dans la cellule (2) pour forcer l'extrusion du film solide par l'orifice de sortie (4).

10. Procédé d'extrusion selon la revendication 9, **caractérisé en ce que** le matériau (M1) est un fluide cryogénique et **en ce que** l'obturation de l'orifice de sortie (4) comporte les étapes suivantes :
- maintenir l'orifice de sortie (4) à une première température (T1) inférieure à la température (T0) du point triple du fluide cryogénique (M1), et une première zone (6) des parois latérales (2b) à une deuxième température (T2) supérieure à la température (T0) du point triple du fluide cryogénique (M1) ;
- introduire le fluide cryogénique (M1) dans la cellule (2) avec une pression (P0) dans la cellule (2), permettant la solidification du fluide cryogénique (M1) à l'orifice de sortie (4).

11. Procédé d'extrusion selon la revendication 10, **caractérisé en ce qu'**après l'obturation de l'orifice de sortie (4), la deuxième température (T2) dans la première zone (6) est maintenue à une température sensiblement égale à la première température (T1) à l'orifice de sortie (4) de manière à former le volume (V1) à base du fluide cryogénique (M1) solidifié, la première zone (6) étant en contact avec le volume (V1).

12. Procédé d'extrusion selon l'une quelconque des revendications 9 à 11, **caractérisé en ce qu'**avant la génération du gradient de température pour forcer l'extrusion du film solide, la première température (T1) à l'orifice de sortie (4) est maintenue à une température sensiblement égale à la température (T0) du point triple du matériau (M1).

13. Procédé d'extrusion selon l'une quelconque des revendications 9 à 12, **caractérisé en ce que** le film solide est extrudé avec une vitesse régulée par le réglage de la deuxième température (T2) à la première zone (6) de la cellule (2).

## Patentansprüche

1. Vorrichtung zum Extrudieren (1) von einem festen Film, umfassend:
- eine Zelle (2), die mit einem Boden (2a) und Seitenwänden (2b) versehen ist;
- eine Eintrittsöffnung (3) in die Zelle (2) für ein Material, das dazu bestimmt ist, den festen Film zu bilden;
- eine Austrittsöffnung (4) für den festen Film aus der Zelle (2);
- eine Vorrichtung zum Anwenden einer ersten Temperatur (T1) auf die Austrittsöffnung (4) der Zelle (2) und einer zweiten Temperatur (T2) in einem ersten Bereich (6) der Zelle (2), der von der Austrittsöffnung (4) verschieden ist;
- einen Steuerkreis, der geeignet ist, auf die Vorrichtung zum Anwenden einer ersten (T1) und einer zweiten Temperatur (T2) eine erste Einstellung anzuwenden, um ein Volumen (V1) des Materials in der festen Phase im Inneren der Zelle (2) zu bilden, wobei das Volumen die Austrittsöffnung (4) verstopft;
**dadurch gekennzeichnet, dass** der Steuerkreis geeignet ist, auf die Vorrichtung zum Anwenden einer ersten und einer zweiten Temperatur eine zweite Einstellung anzuwenden, um einen Temperaturgradienten zwischen der Austrittsöffnung (4) und dem ersten Bereich (6) derart zu erzeugen, um in der Zelle (2) einen Druck zu erzeugen, der das Extrudieren des festen Films durch die Austrittsöffnung (4) bewirkt.

2. Vorrichtung zum Extrudieren (1) nach Anspruch 1, **dadurch gekennzeichnet, dass** die Austrittsöffnung (4) unterhalb der Eintrittsöffnung (3) angeordnet ist.

3. Vorrichtung zum Extrudieren (1) nach einem der Ansprüche 1 und 2, **dadurch gekennzeichnet, dass** der Steuerkreis geeignet ist, auf die Vorrichtung zum Anwenden einer ersten (T1) und einer zweiten Temperatur (T2) eine dritte Einstellung anzuwenden, um das Innenvolumen (Vc) der Zelle (2) vollständig mit dem Material in der festen Phase zu füllen.

4. Vorrichtung zum Extrudieren (1) nach einem der Ansprüche 1 bis 3, **dadurch gekennzeichnet, dass** sie ein dichtes Gehäuse (7) aufweist, in dessen Innerem sich die Zelle (2) befindet, und dadurch, dass sie Mittel zum Erzeugen eines Vakuums in dem dichten Gehäuse (7) aufweist, wobei der feste Film, der von der Zelle (2) extrudiert wird, in dem dichten Gehäuse (7) gewonnen wird.

5. Vorrichtung zum Extrudieren (1) nach einem der Ansprüche 1 bis 4, **dadurch gekennzeichnet, dass** sie eine Einspritzquelle (Sm) für Wasserstoff oder Deuterium in der Gas- oder Flüssigphase derart aufweist, um jeweils einen festen Film aus Wasserstoff oder Deuterium zu extrudieren.

6. Vorrichtung zum Extrudieren (1) nach einem der Ansprüche 1 bis 5, **dadurch gekennzeichnet, dass** die Zelle (2) einen Verschluss (5) für die Eintrittsöffnung (3) aufweist.

7. Vorrichtung zum Extrudieren (1) nach Anspruch 6, **dadurch gekennzeichnet, dass** der Verschluss (5) ein Ventil aufweist, das konfiguriert ist, um den Druck in der Zelle (2) einzustellen.

8. Vorrichtung zum Extrudieren (1) nach einem der Ansprüche 6 und 7, **dadurch gekennzeichnet, dass** der Verschluss (5) Kühlmittel aufweist.

9. Verfahren zum Extrudieren eines festen Films, das eine Vorrichtung nach einem der Ansprüche 1 bis 8 verwendet und die folgenden aufeinanderfolgenden Schritte aufweist:
- Verschließen der Austrittsöffnung (4), indem das Material (M1) in der Austrittsöffnung (4) verfestigt wird;
- Bilden eines Volumens (V1) des Materials (M1) in der festen Phase, wobei das Volumen die Austrittsöffnung (4) bedeckt;
**dadurch gekennzeichnet, dass** es die folgenden Schritte aufweist:
- Schließen der Eintrittsöffnung (3);
- Erzeugen eines Temperaturgradienten in dem Volumen (V1) derart, um in der Zelle (2) einen Druck (Pₑₓ) zu erzeugen, um das Extrudieren des festen Films durch die Austrittsöffnung (4) zu bewirken.

10. Verfahren zum Extrudieren nach Anspruch 9, **dadurch gekennzeichnet, dass** das Material (M1) ein kryogenes Fluid ist und dass das Verschließen der Austrittsöffnung (4) die folgenden Schritte aufweist:
- Halten der Austrittsöffnung (4) auf einer ersten Temperatur (T1), die niedriger ist als die Temperatur (T0) des Tripelpunktes des kryogenen Fluids (M1), und eines ersten Bereichs (6) der Seitenwände (2b) auf einer zweiten Temperatur (T2), die höher ist als die Temperatur (T0) des Tripelpunktes des kryogenen Fluids (M1);
- Einführen des kryogenen Fluids (M1) in die Zelle (2) mit einem Druck (P0) in der Zelle (2), der das Verfestigen des kryogenen Fluids (M1) an der Austrittsöffnung (4) ermöglicht.

11. Verfahren zum Extrudieren nach Anspruch 10, **dadurch gekennzeichnet, dass** die zweite Temperatur (T2) nach dem Verschließen der Austrittsöffnung (4) in dem ersten Bereich (6) auf einer Temperatur gehalten wird, die im Wesentlichen gleich der ersten Temperatur (T1) an der Austrittsöffnung (4) ist, derart, um das Volumen (V1) auf Basis des verfestigten kryogenen Fluids (M1) zu bilden, wobei der erste Bereich (6) in Kontakt mit dem Volumen (V1) steht.

12. Verfahren zum Extrudieren nach einem der Ansprüche 9 bis 11, **dadurch gekennzeichnet, dass** vor dem Erzeugen des Temperaturgradienten zum Forcieren des Extrudierens des festen Films die erste Temperatur (T1) an der Austrittsöffnung (4) auf einer Temperatur gehalten wird, die im Wesentlichen gleich der Temperatur (T0) des Tripelpunktes des Materials (M1) ist.

13. Verfahren zum Extrudieren nach einem der Ansprüche 9 bis 12, **dadurch gekennzeichnet, dass** der feste Film mit einer Geschwindigkeit extrudiert wird, die durch das Einstellen der zweiten Temperatur (T2) im ersten Bereich (6) der Zelle (2) geregelt wird.

## Claims

1. An extrusion device (1) of a solid film comprising:
- a cell (2) provided with a bottom (2a) and with side walls (2b);
- an input opening (3) to the cell (2) for input of a material designed to form the solid film,
- an output opening (4) of the solid film from the cell (2);
- a device for applying a first temperature (T1) to the output opening (4) of the cell (2) and a second temperature (T2) in a first zone (6) of the cell (2) distinct from the output opening (4);
- a control circuit suitable to impose the device for applying the first (T1) and second (T2) temperatures, a first set for forming a volume (V1) of the material in solid phase inside the cell (2), said volume sealing off the output opening (4);
**characterized in that** the control circuit is suitable to impose the device for applying the first and second temperatures a second set to generate a temperature gradient between the output opening (4) and the first zone (6) so as to generate a pressure in the cell (2) forcing extrusion of the solid film via the output opening (4).

2. The extrusion device (1) according to claim 1, **characterized in that** the output opening (4) is situated below the input opening (3).

3. The extrusion device (1) according to one of claims 1 and 2, **characterized in that** the control circuit is suitable to impose to the device for applying the first (T1) and second (T2) temperatures a third set for completely fill the inner volume (Vc) of the cell (2) with said material in solid phase.

4. The extrusion device (1) according to any one of claims 1 to 3, **characterized in that** it comprises a sealed enclosure (7) inside which the cell (2) is located and **in that** it comprises means for creating a vacuum in the sealed enclosure (7), the solid film extruded by the cell (2) being recovered in the sealed enclosure (7).

5. The extrusion device (1) according to the any one of claims 1 to 4, **characterized in that** it comprises an injection source (Sm) of hydrogen or deuterium in gas or liquid phase so as to respectively extrude a solid film of hydrogen or deuterium.

6. The extrusion device (1) according to any one of claims 1 to 5, **characterized in that** the cell (2) comprises a closing device (5) of the input opening (3).

7. The extrusion device (1) according to claim 6, **characterized in that** the closing device (5) comprises a valve configured to regulate the pressure in the cell (2).

8. The extrusion device (1) according to one of claims 6 and 7, **characterized in that** the closing device (5) comprises cooling means.

9. A method for extrusion of a solid film using a device according to any one of claims 1 to 8, and comprising the following successive steps:
- sealing off the output opening (4) by solidifying the material (M1) in the output opening (4);
- forming a volume (V1) of the material (M1) in solid phase, said volume (V1) covering the output opening (4);
**characterized in that** it comprises the following successive steps:
- closing the input opening (3);
- generating a temperature gradient in said volume (V1) so as to generate a pressure (Pₑₓ) in the cell (2) to force extrusion of the solid film via the output opening (4).

10. The method for extrusion according to claim 9, **characterized in that** the material (M1) is a cryogenic fluid and **in that** sealing of the output opening (4) comprises the following steps:
- maintaining the output opening (4) at a first temperature (T1) lower than the temperature (T0) of the triple point of the cryogenic fluid (M1), and a first zone (6) of the side walls (2b) at a second temperature (T2) higher than the temperature (T0) of the triple point of the cryogenic fluid (M1)fluid;
- input of the cryogenic fluid (M1) to the cell (2) with a pressure (P0) in the cell (2), enabling solidification of the cryogenic fluid (M1) at the output opening (4).

11. The method for extrusion according to claim 10, **characterized in that** after sealing of the output opening (4), the second temperature (T2) in the first zone (6) is maintained at a temperature substantially equal to the first temperature (T1) at the output opening (4) so as to form the volume (V1) having a base of solidified cryogenic fluid (M1), the first zone (6) being in contact with the volume (V1).

12. The method for extrusion according to any one of claims 9 to 11, **characterized in that** before generation of the temperature gradient to force extrusion of the solid film, the first temperature (T1) at the output opening (4) is maintained at a temperature substantially equal to the temperature (T0) of the triple point of the material (M1).

13. The method for extrusion according to any one of claims 9 to 12, **characterized in that** the solid film is extruded with a rate regulated by adjustment of the second temperature (T2) in the first zone (6) of the cell (2).
